# EUROPÄISCHE PATENTANMELDUNG

(11) **EP 3 770 369 A1**
(43) Veröffentlichungstag der Anmeldung: **27.01.2021**
(21) Anmeldenummer: 19187745.5
(22) Anmeldetag: 23.07.2019
(51) Int. Cl.: E06B 3/673, E06B 3/663, B65G 1/04, B65G 1/14, B65G 57/18

(54) **LAGERVORRICHTUNG FÜR HOHLPROFILABSTANDHALTER**

(71) Anmelder: SAINT-GOBAIN GLASS FRANCE, 92400 Courbevoie (FR)
(72) Erfinder: KUSTER, Hans-Werner, 52066 AACHEN (DE); SCHREIBER, Walter, 52074 Aachen (DE); HENSELER, Martin, 78315 Radolfzell (DE); WEISSLER, Ariane, 52064 Aachen (DE)
(74) Vertreter: Lendvai, Tomas

(57) **Zusammenfassung**

Vorrichtung (100) zum Lagern und Ausrichten von Hohlprofilabstandhaltern (110) für Isolierglaseinheiten, mindestens umfassend zwei oder mehr profilierte Trägerplatten (101), wobei
- jede Trägerplatte (101) zwei oder mehr parallel verlaufende Vertiefungen (102) aufweist, die in der Erstreckungsebene (XY) der Trägerplatte (101) nebeneinander angeordnet sind,
- in den Vertiefungen (102) Hohlprofilabstandhalter (110) angeordnet sind,
- alle Trägerplatten (101) übereinander im Wesentlichen deckungsgleich gestapelt sind,
- jeweils zwischen zwei Trägerplatten (101.1, 101.2) am Rand der gestapelten Trägerplatten (101.1, 101.2) umlaufend ein Distanzrahmen (103) angeordnet ist, wobei der Abstand zwischen einer auf dem Distanzrahmen angeordneten oberen Trägerplatte (101.1) und einer unter dem Distanzrahmen angeordneten unteren Trägerplatte (101.2) durch die Höhe h des Distanzrahmens bestimmt ist, und wobei durch den Distanzrahmen (103), die untere Trägerplatte (101.2) und die obere Trägerplatte (101.1) ein feuchtigkeitsdichter Zwischenraum (104) begrenzt ist.

## Beschreibung

Die Erfindung betrifft eine Vorrichtung zum Lagern und Ausrichten von Hohlprofilabstandhaltern für Isolierglaseinheiten und ein Verfahren zur Herstellung einer Isolierglaseinheit unter Verwendung der Vorrichtung.

Isolierverglasungen enthalten in der Regel mindestens zwei Scheiben aus Glas oder polymeren Materialien. Die Scheiben sind über einen vom Abstandhalter (Spacer) definierten Gasraum voneinander getrennt. Das Wärmedämmvermögen von Isolierglas ist deutlich höher als das von Einfachglas und kann in Dreifachverglasungen oder mit speziellen Beschichtungen noch weiter gesteigert und verbessert werden.

Von dem Aspekt der Wärmeleitfähigkeit sind polymere Abstandhalter gegenüber metallischen Abstandhaltern bevorzugt. Allerdings ist die Verarbeitung von polymeren Abstandhaltern anders als die von metallischen Abstandhaltern. Metallische Abstandhalter sind als Hohlprofile kalt biegbar und können so einfach zu kompletten Abstandhalterrahmen gebogen werden, die mit Trockenmittel gefüllt werden und dann in eine Isolierverglasung eingebaut werden. Aufgrund einer ausreichenden Längssteifigkeit des Metalls biegen sich metallische Abstandhalterrahmen kaum durch.

Polymere Abstandhalter dagegen sind auch aufgrund der Zumischung verschiedener Füllstoffe in der Regel nicht kalt biegbar. Für die Herstellung eines Abstandhalterrahmens für eine Isolierglaseinheit müssen daher mehrere Stücke Abstandhalter über Steckverbinder, die in den Hohlraum eines Abstandhalters eingreifen, verbunden werden und verklebt oder verschweißt werden. In der DE10 2008 044 771 B3 ist ein Verfahren offenbart, bei dem mehrere Stücke Hohlprofil auf Gehrung geschnitten werden, die dann mithilfe von Eckverbindern zu einem vollständigen Rahmen zusammengesetzt werden. Ein solcher Rahmen wird in der Regel für die Herstellung einer Isolierverglasung mit Trockenmittel befüllt, an den Seiten, die in Kontakt mit den Glasscheiben kommen, mit einer Abdichtmasse bzw. einer Klebemasse versehen und dann zwischen zwei Glasscheiben angeordnet und verpresst. Der Abstandhalterrahmen ist üblicherweise etwas kleiner als die Glasscheiben, sodass ein umlaufender äußerer Scheibenzwischenraum zwischen den überstehenden Glasscheiben und der Außenseite des Abstandhalterrahmens entsteht. Dieser Zwischenraum wird mit einer Dichtmasse verfüllt, die die mechanischen Belastungen auf den Randverbund aufnimmt.

Das beschriebene Verfahren zur Herstellung einer Isolierverglasung nach dem Stand der Technik weist verschiedene Nachteile auf: Der Transport eines zusammengesetzten und gegebenenfalls mit Trockenmittel befüllten Abstandhalterrahmens in einem Stück zu einer Isolierglaspresse ist besonders bei großen Scheiben schwierig. Aufgrund der geringen Längssteifigkeit von polymeren Hohlprofilabstandhaltern ist dies besonders für polymere Hohlprofilabstandhalter sehr schwierig und birgt die Gefahr von Beschädigungen des Abstandhalterrahmens. Besonders die Ecken sind anfällig für Brüche. Die Auftragung des Abdichtmittels auf die Scheibenkontaktflächen des zusammengesetzten Abstandhalterrahmens ist für metallische und polymere Hohlprofilabstandhalter gleichermaßen schwierig und zeitraubend.

Ein wichtiger Aspekt bei der Herstellung von Isolierglaseinheiten ist der Ausschluss von Feuchtigkeit im inneren Scheibenzwischenraum. Daher muss bei dem Zusammenbau einer Isolierverglasung jeder Eintrag von Feuchtigkeit vermieden werden. Insbesondere bei polymeren Hohlprofilabstandhaltern nimmt auch der Grundkörper Feuchtigkeit auf. Daher ist eine lange Lagerung von polymeren Hohlprofilabstandhaltern ohne besondere Maßnahmen problematisch. Insbesondere eine Füllung mit Trockenmittel zeitlich und räumlich versetzt vor der Isolierglasherstellung wird aus diesem Grund nach dem Stand der Technik bisher ausgeschlossen.

Es ist daher die Aufgabe der vorliegenden Erfindung, eine Vorrichtung zum Lagern und Ausrichten von Hohlprofilabstandhaltern bereitzustellen, die eine trockene und sichere Lagerung von Hohlprofilabstandhaltern ermöglicht, sowie ein vereinfachtes Verfahren zur Herstellung einer Isolierverglasung.

Die Aufgabe der vorliegenden Erfindung wird erfindungsgemäß durch eine Vorrichtung zum Lagern und Ausrichten von Hohlprofilabstandhaltern für Isolierglaseinheiten nach dem unabhängigen Anspruch 1 gelöst. Bevorzugte Ausführungen der Erfindung gehen aus den Unteransprüchen hervor.

Ein erfindungsgemäßes Verfahren zur Herstellung einer Isolierglaseinheit unter Verwendung einer erfindungsgemäßen Vorrichtung zum Lagern von Hohlprofilabstandhaltern geht aus einem weiteren unabhängigen Anspruch hervor.

Die erfindungsgemäße Vorrichtung zum Lagern und Ausrichten von Hohlprofilabstandhaltern für Isolierglaseinheiten umfasst mindestens zwei oder mehr profilierte Trägerplatten, wobei jede Trägerplatte zwei oder mehr parallel verlaufende Vertiefungen aufweist, die in der Erstreckungsebene (XY) der Trägerplatte nebeneinander angeordnet sind. In den Vertiefungen sind jeweils Hohlprofilabstandhalter angeordnet. Die Hohlprofilabstandhalter erstrecken sich in Längsrichtung (X) und passen so in die Vertiefungen, dass sie bei einem Transport der Vorrichtung nicht verrutschen; das heißt die Breite der Hohlprofile ist etwas kleiner als die Breite der Vertiefungen. Bevorzugt ist in jeder Vertiefung jeweils ein Hohlprofilabstandhalter angeordnet. Dies ist vorteilhaft für die Stabilität der Vorrichtung, da so eine gleichmäßige Verteilung des Gewichts der oberen Trägerplatten auf die darunter angeordneten Hohlprofilabstandhalter erreicht wird. Alternativ bevorzugt sind einige Vertiefungen einer Trägerplatte leer.
Alle Trägerplatten der Vorrichtung sind im Wesentlichen deckungsgleich übereinandergestapelt, das heißt die Trägerplatten sind senkrecht (Z) zur Erstreckungsebene (XY) übereinander deckungsgleich angeordnet. Der Abstand zwischen zwei Trägerplatten wird durch einen dazwischen angeordneten umlaufenden Distanzrahmen der Höhe h bestimmt. Dieser Distanzrahmen verläuft am Rand der gestapelten Trägerplatten und steht entweder direkt oder bevorzugt über eine Dichtung in Kontakt mit einer auf dem Distanzrahmen angeordneten oberen Trägerplatte und einer unter dem Distanzrahmen angeordneten unteren Trägerplatte. Durch den Distanzrahmen, die untere Trägerplatte und die obere Trägerplatte ist ein feuchtigkeitsdichter Zwischenraum begrenzt.
So entsteht ein Trägerplattenstapel aus n Trägerplatten und n-1 Distanzrahmen, die n-1 feuchtigkeitsdichte Zwischenräume begrenzen. Innerhalb dieser Zwischenräume können Hohlprofilabstandhalter in einer trockenen Umgebung gelagert werden, was die zeitlich und räumlich getrennte Herstellung von mit Trockenmittel befüllten Hohlprofilabstandhaltern und der entsprechenden Isolierglaseinheit ermöglicht. Die Abmessungen der Trägerplatten und damit auch die Anzahl und Größe der Vertiefungen und die Anzahl der Trägerplatten richten sich nach den für die Isolierglasherstellung benötigten Hohlprofilabstandhalter. Die Vorrichtung bietet zusätzlich zu den genannten Vorteilen bezüglich Transport einen weiteren Vorteil für die automatisierte Herstellung von Isolierglaseinheiten. Die Hohlprofilabstandhalter sind in den Trägerplatten definiert ausgerichtet und können so von einem Roboter aus der Platte entnommen werden, ohne dass ein manuelles Eingreifen erforderlich ist.

Die Begriffe oben und unten beziehen sich auf die Z-Richtung, also senkrecht zur Erstreckungsebene (XY) der Trägerplatten. Die Begriffe obere Trägerplatte und untere Trägerplatte beziehen sich auf die Anordnung relativ zu einem dazwischen angeordneten Distanzrahmen. Dies bedeutet, dass eine obere Trägerplatte in Bezug auf einen bestimmten Distanzrahmen gleichzeitig die untere Trägerplatte in Bezug auf den darüber angeordneten Distanzrahmen ist. Eine Ausnahme sind die oberste Trägerplatte des Trägerplattenstapels und die unterste Trägerplatte des Trägerplattenstapels, die den Trägerplattenstapel abschließen. Diese beiden Trägerplatten haben nur Kontakt zu einem Distanzrahmen.

In einer bevorzugten Ausführungsform ist der Trägerplattenstapel von einer feuchtigkeitsdichten äußeren Hülle umgeben, die den Trägerplattenstapel während des Transports vor Feuchtigkeit schützt und stabilisiert. Die äußere Hülle kann eine formstabile Hülle wie zum Beispiel eine Kiste sein. Alternativ kann die äußere Hülle eine feuchtigkeitsdichte Folie in Kombination mit einem Rahmen oder einem Rahmengestell sein. Der Trägerplattenstapel ist in dem Rahmen oder Gestell fixiert, wobei zur Verbesserung der Abdichtung die gesamte Anordnung mit der feuchtigkeitsdichten Folie umwickelt ist. In einer bevorzugten Ausführungsform sind die einzelnen Trägerplatten mit einer oder mehreren Bohrungen oder Ösen versehen, sodass alle Trägerplatten eines Trägerplattenstapels auf Stangen oder Rohre eines Gestells aufgefädelt werden können, wodurch der Trägerplattenstapel besonders gut fixiert wird.

Bevorzugt ist innerhalb der äußeren Hülle ein zusätzliches Trockenmittel angeordnet, das auch eine längerfristige Lagerung ermöglicht.
Bevorzugt erfolgt die Verpackung der Hohlprofilabstandhalter unter Ausschluss von Feuchtigkeit. Dies kann durch die Verwendung eines trockenen Schutzgases erzielt werden. Die äußere Hülle ist bevorzugt mit einem trockenen inerten Gas gefüllt beziehungsweise gespült. So wird eine Aufnahme von Feuchtigkeit durch die Hohlprofilabstandhalter effizient verhindert.

Im feuchtigkeitsdichten Zwischenraum zwischen einer oberen Trägerplatte und einer unteren Trägerplatte sind mindestens zwei elastische Zwischenstücke angeordnet. Die Zwischenstücke stehen mit den Hohlprofilabstandhaltern in Kontakt, die auf der unteren Trägerplatte aufliegen und mit der oberen Trägerplatte in Kontakt. Die elastischen Zwischenstücke verhindern ein Verrutschen der Hohlprofilabstandhalter und stabilisieren so zusätzlich die gesamte Vorrichtung. Bevorzugt erstrecken sich die elastischen Zwischenstücke in Richtung senkrecht zur Erstreckungsrichtung der Vertiefungen über die gesamte Breite (Y-Richtung) eines Zwischenraums. So können alle Hohlprofilabstandhalter einer Trägerplatte fixiert werden. Die Zwischenstücke verlaufen bevorzugt parallel zueinander. Als elastische Zwischenstücke sind weiche, nicht klebrige Materialien bevorzugt, wie zum Beispiel Schaumstoffe.

In einer bevorzugten Ausführungsform ist zwischen einem Distanzrahmen und einer oberen Trägerplatte eine elastische Dichtung angeordnet. Bevorzugt ist auch zwischen dem Distanzrahmen und der unteren Trägerplatte eine elastische Dichtung angeordnet. Wenn ein Distanzrahmen über elastische Dichtungen mit den Trägerplatten in Kontakt steht, wird die Dichtigkeit des Zwischenraums gegenüber Feuchtigkeit verbessert.

In einer bevorzugten Ausführungsform haben die Vertiefungen eine Breite zwischen 5 mm und 60 mm. Die Breite der Vertiefungen entspricht der Erstreckung der Vertiefung in Y-Richtung. Die Länge der Vertiefungen, d.h. die Erstreckung in X-Richtung richtet sich nach der Länge der zu lagernden Hohlprofilabstandhalter. Bevorzugt ist eine Länge zwischen 100 cm und 300 cm. Die Tiefe der Vertiefungen (gemessen in Z-Richtung) ist so groß, dass die Hohlprofilabstandhalter nicht verrutschen. Bevorzugt ist eine Tiefe von etwa 1 mm bis 3 mm.

In einer bevorzugten Ausführungsform umfasst die erfindungsgemäße Vorrichtung einen Trägerplattenstapel mit 10 bis 150 Trägerplatten, bevorzugt mit 50 bis 100 Trägerplatten. So kann eine Vorrichtung den gesamten Vorrat an Hohlprofilabstandhaltern für eine Schicht in der Isolierglasherstellung umfassen, wobei der Stapel gleichzeitig eine gute Stabilität aufweist.

In einer bevorzugten Ausführungsform sind die Trägerplatten metallisch. Dies sorgt für eine gute Abdichtung der Zwischenräume gegen Feuchtigkeit. Bevorzugt bestehen sie aus einem Stahl. Alternativ bevorzugt können die Trägerplatten auch aus einem nichtmetallischen Material bestehen, wie zum Beispiel aus Kunststoff oder faserverstärkten Kunststoffverbundstoffen. Diese weisen eine besonders gute Stabilität auf bei gleichzeitig niedrigem Gewicht. Dies ist vorteilhaft für die Produktionskosten.

In einer bevorzugten Ausführungsform ist der Distanzrahmen metallisch und besteht bevorzugt aus einem Stahl. Da der Distanzrahmen die äußere Begrenzung der Zwischenräume bildet, wird durch einen metallischen Rahmen eine gute Abdichtung des Zwischenraums gegen Feuchtigkeit erzielt.

In einer bevorzugten Ausführungsform umfasst jeder Hohlprofilabstandhalter ein sich in Längsrichtung (X) erstreckendes Hohlprofil mit einer ersten Seitenwand, einer parallel dazu angeordneten zweiten Seitenwand, einer Verglasungsinnenraumwand, einer Außenwand und einem Hohlraum. Der Hohlraum wird von den Seitenwänden, der Verglasungsinnenraumwand und der Außenwand umschlossen. Die Verglasungsinnenraumwand ist dabei im Wesentlichen senkrecht zu den Seitenwänden angeordnet und verbindet die erste Seitenwand mit der zweiten Seitenwand. Die Seitenwände sind die Wände des Hohlprofils, an denen die äußeren Scheiben der späteren Isolierglaseinheit angebracht werden. Die Verglasungsinnenraumwand ist die Wand des Hohlprofils, die nach Einbau in die fertige Isolierglaseinheit zum inneren Scheibenzwischenraum weist. Die Außenwand ist im Wesentlichen parallel zur Verglasungsinnenraumwand angeordnet und verbindet die erste Seitenwand mit der zweiten Seitenwand. Die Außenwand weist nach Einbau in die fertige Isolierglaseinheit zum äußeren Scheibenzwischenraum.

Der Hohlraum des Hohlprofils enthält bevorzugt ein Trockenmittel, das in der späteren Isolierverglasung Feuchtigkeit aus dem inneren Scheibenzwischenraum aufnehmen kann und so ein Beschlagen der Glasscheiben von innen verhindert. Der Hohlraum ist durch einen ersten Verschluss und einen zweiten Verschluss verschlossen gegen den Verlust von Trockenmittel. Dank der Lagerung in der erfindungsgemäßen Vorrichtung, bei der ein Ausschluss von Feuchtigkeit sichergestellt ist, können die Hohlprofilabstandhalter gefüllt mit Trockenmittel gelagert und transportiert werden. Das Hohlprofil erstreckt sich in Längsrichtung (X) von einem ersten Ende zu einem zweiten Ende. Der erste Verschluss und / oder der zweite Verschluss können jeweils an einem Ende des Hohlprofils angeordnet sein oder etwas versetzt mit einem Abstand zum jeweiligen Ende des Hohlprofils.

Der Hohlprofilabstandhalter weist bevorzugt entlang der Seitenwände eine Höhe von 5 mm bis 15 mm, besonders bevorzugt von 5 mm bis 10 mm, auf. In diesem Bereich für die Höhe besitzt der Hohlprofilabstandhalter eine hohe Stabilität, ist aber andererseits in der Isolierglaseinheit vorteilhaft unauffällig. Außerdem weist der Hohlraum des Abstandhalters eine vorteilhafte Größe zur Aufnahme einer geeigneten Menge an Trockenmittel auf. Die Höhe des Abstandhalters ist der Abstand zwischen den voneinander abgewandten Flächen der Außenwand und der Verglasungsinnenraumwand.

Das Hohlprofil weist bevorzugt entlang der Verglasungsinnenraumwand eine Breite von 5 mm bis 55 mm, bevorzugt von 10 mm bis 20 mm auf. Die Breite ist im Sinne der Erfindung die sich zwischen den Seitenwänden erstreckende Dimension. Die Breite ist der Abstand zwischen den voneinander abgewandten Flächen der beiden Seitenwände. Durch die Wahl der Breite der Verglasungsinnenraumwand wird der Abstand zwischen den Scheiben der Isolierglaseinheit bestimmt. Das genaue Abmaß der Verglasungsinnenraumwand richtet sich nach den Dimensionen der Isolierglaseinheit und der gewünschten Scheibenzwischenraumgröße.

In einer bevorzugten Ausführungsform der Vorrichtung ist auf der ersten Seitenwand und auf der zweiten Seitenwand der Hohlprofilabstandhalter eine plastisch verformbare Abdichtmasse angebracht. Die plastisch verformbare Abdichtmasse bildet in der späteren Isolierverglasung die Abdichtung des inneren Scheibenzwischenraums gegen das Eindringen von Feuchtigkeit. Zudem bietet die plastisch verformbare Abdichtmasse die Möglichkeit, den Abstandhalter direkt auf eine Glasscheibe aufzusetzen. Somit entfällt im Vergleich zur herkömmlichen Isolierglasproduktion ein zusätzlicher Schritt, in dem der zusammengesetzte Abstandhalterrahmen vor dem Einbau in eine Isolierverglasung mit einer Abdichtmasse versehen werden muss. Die plastisch verformbare Abdichtmasse ist nur auf einem Teil der ersten Seitenwand und nur auf einem Teil der zweiten Seitenwand aufgebracht. Die plastisch verformbare Abdichtmasse ist so angebracht, dass der Bereich des Hohlprofiabstandhalters, der innerhalb einer Vertiefung angeordnet ist, frei von plastisch verformbarer Abdichtmasse ist. So wird verhindert, dass der Hohlprofilabstandhalter in der Vertiefung festklebt. Außerdem ist der in Richtung einer oberen Trägerplatte weisende Teil der Seitenwände ebenfalls frei von plastischer Abdichtmasse. Dies betrifft nur den direkt an die Verglasungsinnenraumwand oder an die Außenwand angrenzenden Bereich der Seitenwände, sodass ausgeschlossen wird, dass die obere Trägerplatte oder die elastischen Zwischenstücke mit der plastischen Abdichtmasse in Kontakt kommen und der Hohlprofilabstandhalter daran festklebt.

Ein solcher Abstandhalter bietet somit die Möglichkeit zu einem erheblich vereinfachten Zusammenbau der späteren Isolierverglasung. Dank der auf den Seitenwänden vorhandenen plastisch verformbaren Abdichtmasse können die einzelnen Hohlprofile direkt auf der Glasscheibe zusammengesetzt werden, sodass die Herstellung eines Abstandhalterrahmens ohne Kontakt zu einer Glasscheibe nicht mehr notwendig ist. Da die Hohlprofilabstandhalter bereits mit einem Trockenmittel befüllt sind, muss in der Isolierglasherstellung kein extra Schritt für die Befüllung mit Trockenmittel vorgesehen werden, was die Herstellung der Isolierverglasung erheblich vereinfacht. Dank der erfindungsgemäßen Vorrichtung können die mit Abdichtmasse und Trockenmittel vorbereiteten Abstandhalter geeignet gelagert werden. Zudem sind die Abstandhalter definiert ausgerichtet, was für den Produktionsprozess vorteilhaft ist.

Die Formgebung des Auftrags der plastisch verformbaren Abdichtmasse ist variabel. Sie ist abhängig von der Auftragsmethode und kann durch die Form der Auftragsdüse mitbestimmt werden. Im Querschnitt gesehen hat die Abdichtmasse beispielsweise eine runde bis ovale Form, eine näherungsweise rechteckige Form und bevorzugt näherungsweise die Form eines Dreiecks. Beim Verpressen der Scheiben zu einer Isolierglaseinheit verbreitert sich die Abdichtmasse und füllt den Raum zwischen Seitenwand und Scheibe vollständig aus. Bei einer dreieckigen Form wird ein Lufteinschluss zwischen Abdichtmasse und Scheibe besonders wirksam verhindert.

Die plastisch verformbare Abdichtmasse ist bevorzugt ein Butyl, besonders bevorzugt ein Polyisobutylen. Das Polyisobutylen kann ein vernetzendes oder ein nicht vernetzendes Polyisobutylen sein.
Der Hohlprofilabstandhalter kann als polymeres Hohlprofil oder als metallisches Hohlprofil oder einer Kombination von polymerem und metallischen Grundkörper ausgeführt sein. Bevorzugt ist das Hohlprofil ein polymeres Hohlprofil, da die Wärmeisolierenden Eigenschaften in diesem Fall deutlich verbessert sind gegenüber metallischen Hohlprofilen.

In einer bevorzugten Ausführungsform ist mindestens am ersten Ende des Hohlprofils in einer ersten Öffnung ein erster Stopfen angeordnet; bevorzugt ist auch am zweiten Ende des Hohlprofils in einer zweiten Öffnung ein zweiter Stopfen angeordnet. Der Verschluss des Hohlprofils über einen Stopfen ist besonders leicht zu realisieren. Ein Stopfen im Sinne der Erfindung bezeichnet einen vorgefertigten in die erste bzw. zweite Öffnung passenden Verschluss, der bevorzugt als Kunststoffformteil gefertigt ist. Im Falle eines polymeren Hohlprofils ist der Stopfen bevorzugt aus dem gleichen oder einem ähnlichen polymeren Werkstoff wie das polymere Hohlprofil gefertigt ist. Dies hat den Vorteil, dass die Längenausdehnungskoeffizienten des / der Stopfen und des polymeren Hohlprofils sich nicht wesentlich unterscheiden. In einer bevorzugten Ausführungsform ist der Stopfen mit einer Barrierebeschichtung oder einer Barrierefolie versehen, sodass eine sichere Abdichtung der ersten bzw. der zweiten Öffnung gegen das Eindringen von Feuchtigkeit gewährleistet ist. Alternativen zu einem Stopfen sind zum Beispiel Pfropfen aus Schaumstoff, Kunststoffstopfen oder Pasten, die nach Einfüllen des Trockenmittels in das Hohlprofil eingeschoben oder eingefüllt werden.

In einer bevorzugten Ausführungsform des erfindungsgemäßen Hohlprofilabstandhalters insbesondere in Kombination mit einem polymeren Hohlprofil ist eine gas- und feuchtigkeitsdichte Barriere in Form einer Barrierefolie oder Barrierebeschichtung auf der ersten Seitenwand, der Außenwand, und auf der zweiten Seitenwand des polymeren Hohlprofils aufgebracht. Die gas- und feuchtigkeitsdichte Barriere dichtet den inneren Scheibenzwischenraum gegen das Eindringen von Feuchtigkeit ab und verhindert den Verlust eines im inneren Scheibenzwischenraum enthaltenen Gases. Bevorzugt sind die Hohlprofilabstandhalter so in den Vertiefungen ausgerichtet, dass die Außenwand mit der gas- und feuchtigkeitsdichten Barriere in Richtung der oberen Trägerplatte weist. Somit wird eine Beschädigung der Barriere in der Vertiefung vermieden. Bevorzugt kommt die Barriere auf der Außenwand nur mit elastischen Zwischenstücken in Kontakt, wodurch ein Verkratzen durch direkten Kontakt mit einer Trägerplatte vermieden wird.

Eine feuchtigkeitsdichte Barriere kann eine Metallbeschichtung, eine keramische Beschichtung, eine Metallfolie, eine Polymerfolie oder eine mehrschichtige Folie mit polymeren und metallischen Schichten oder mit polymeren und keramischen Schichten oder mit polymeren, metallischen und keramischen Schichten sein. Es eignen sich die dem Fachmann bekannten Barrierefolien wie sie bereits für übliche polymere Hohlprofilabstandhalter nach dem Stand der Technik verwendet werden und wie sie zum Bespiel beschrieben sind in den Dokumenten WO2013/104507 A1, WO2016/046081 A1, WO2012/140005 A1.

Metallische Schichten oder Beschichtungen enthalten oder bestehen aus bevorzugt Eisen, Aluminium, Silber, Kupfer, Gold, Chrom und/oder Legierungen oder Oxide davon, besonders bevorzugt Aluminium und / oder Aluminiumoxid.

Im Falle einer mehrschichtigen metallhaltigen Barrierefolie können neben metallischen Schichten auch eine oder mehrere polymere Schichten enthalten sein. Eine polymere Schicht der Barrierefolie umfasst bevorzugt Polyethylenterephthalat, Ethylenvinylalkohol, Polyvinylidenchlorid, Polyamide, Polyethylen, Polypropylen, Silikone, Acrylonitrile, Polyacrylate, Polymethylacrylate und/oder Copolymere oder Gemische davon.
Keramische Schichten oder Beschichtungen enthalten bevorzugt Siliziumoxide und/oder Siliziumnitride oder bestehen daraus.

Die erste Seitenwand und die zweite Seitenwand stellen die Seiten des Abstandhalters dar, an denen beim Einbau des Abstandhalters die Montage der äußeren Scheiben einer Isolierglaseinheit erfolgt. Die erste Seitenwand und die zweite Seitenwand verlaufen parallel zueinander. Die Seitenwände des Hohlprofilabstandhalters weisen in der Vertiefung zu den Wänden der Vertiefung.

Die Außenwand des Hohlprofilabstandhalters ist die der Verglasungsinnenraumwand gegenüberliegende Wand, die vom Innenraum der Isolierglaseinheit (innerer Scheibenzwischenraum) weg in Richtung des äußeren Scheibenzwischenraums weist. Die Außenwand verläuft bevorzugt im Wesentlichen senkrecht zu den Seitenwänden. Eine plane Außenwand, die sich in ihrem gesamten Verlauf senkrecht zu den Seitenwänden (parallel zur Verglasungsinnenraumwand) verhält, hat den Vorteil, dass die Dichtfläche zwischen Abstandhalter und Seitenwänden maximiert wird und eine einfachere Formgebung den Produktionsprozess erleichtert. Die Außenwand weist in der Vorrichtung entweder zum Boden der Vertiefung in der unteren Trägerplatte oder in Richtung der oberen Trägerplatte, je nach Ausrichtung des Hohlprofilabstandhalters.

In einer bevorzugten Ausführungsform des erfindungsgemäßen Abstandhalters sind die den Seitenwänden nächstliegenden Abschnitte der Außenwand in einem Winkel von 30° bis 60° zur Außenwand in Richtung der Seitenwände geneigt. Diese Ausführung verbessert die Stabilität des polymeren Hohlprofils. Bevorzugt sind die den Seitenwänden nächstliegenden Abschnitte in einem Winkel von 45° geneigt. In diesem Fall ist die Stabilität des Abstandhalters weiter verbessert.

In einer bevorzugten Ausführungsform des erfindungsgemäßen Hohlprofilabstandhalters ist das Hohlprofil ein polymeres Hohlprofil und enthält Polyethylen (PE), Polyvinylchlorid (PVC), Polycarbonat (PC), Polypropylen (PP), Polystyrol, Polynitrile, Polyester, Polymethylmetacrylate, Polyacrylate, Polyamide, Polyethylenterephthalat (PET), Polybutylenterephthalat (PBT), bevorzugt AcrylnitrilButadien-Styrol (ABS), Acrylester-Styrol-Acrylnitril (ASA), Acrylnitril-Butadien-Styrol/Polycarbonat (ABS/PC), Styrol-Acrylnitril (SAN), PET/PC, PBT/PC und/oder Gemische davon. In einer besonders bevorzugten Ausführungsform besteht das Hohlprofil im Wesentlichen aus einem der gelisteten Polymere.
Das polymere Hohlprofil kann optional zusätzlich weitere Füllstoffe, Verstärkungsfasern oder Verstärkungselement wie metallische Streifen, Drähte oder Netze enthalten, wie sie aus dem Stand der Technik für polymere Hohlprofile bekannt sind. Auch ein Hohlprofil mit einem Hybridaufbau, das heißt einem polymeren Grundkörper und einer metallischen Schiene ist möglich.

In einer bevorzugten Ausführungsform ist das polymere Hohlprofil glasfaserverstärkt. Durch die Wahl des Glasfaseranteils kann der Wärmeausdehnungskoeffizient des polymeren Hohlprofils variiert und angepasst werden. Durch Anpassung des Wärmeausdehnungskoeffizienten des polymeren Hohlprofils und der Barrierefolie oder -beschichtung lassen sich temperaturbedingte Spannungen zwischen den unterschiedlichen Materialien und ein Abplatzen der Barrierefolie oder -beschichtung vermeiden. Das polymere Hohlprofil weist bevorzugt einen Glasfaseranteil von 20 Gew.-% bis 50 Gew.-%, besonders bevorzugt von 30 Gew.-% bis 40 Gew-% auf. Der Glasfaseranteil im polymeren Hohlprofil verbessert gleichzeitig die Festigkeit und Stabilität.

In einer bevorzugten Ausführungsform weist die Verglasungsinnenraumwand mindestens eine Perforierung auf. Bevorzugt sind mehrere Perforierungen in der Verglasungsinnenraumwand angebracht. Die Gesamtzahl der Perforierungen hängt dabei von der Größe der Isolierglaseinheit ab. Die Perforierungen in der Verglasungsinnenraumwand verbinden in der Isolierverglasung den Hohlraum mit dem inneren Scheibenzwischenraum, wodurch ein Gasaustausch zwischen diesen möglich wird. Dadurch wird eine Aufnahme von Luftfeuchtigkeit durch das im Hohlraum befindliche Trockenmittel erlaubt und somit ein Beschlagen der Scheiben verhindert.
In einer alternativen bevorzugten Ausführungsform ist das Material der Verglasungsinnenraumwand porös oder mit einem diffusionsoffenen Kunststoff ausgeführt, sodass keine Perforierungen erforderlich sind.

Die Wandstärke d des Hohlprofils beträgt bevorzugt 0,3 mm bis 1,5 mm. Im Falle eines polymeren Hohlprofils beträgt die Wandstärke d besonders bevorzugt 0,7 mm bis 1,2 mm. Im Falle eines metallischen Hohlprofils beträgt die Wandstärke bevorzugt 0,05 mm bis 0,2 mm, bevorzugt etwa 0,1 mm.

Das im Hohlraum enthaltene Trockenmittel umfasst bevorzugt Kieselgele, Molekularsiebe, CaCl₂, Na₂SO₄, Aktivkohle, Silikate, Bentonite, Zeolithe und/oder Gemische davon.

In einer weiteren bevorzugten Ausführungsform enthält der erfindungsgemäße Hohlprofilabstandhalter mindestens eine Nut, die geeignet ist zum Einsetzen einer weiteren Scheibe. Ein solcher Abstandhalter eignet sich für Isolierverglasungen mit mehr als zwei Scheiben. Der Aufbau eines Abstandhalters mit einer Nut ist zum Beispiel aus der WO2014/198431 bekannt.

Die Erfindung umfasst ferner ein Verfahren zur Herstellung einer Isolierglaseinheit umfassend die Schritte:
(A) Bereitstellen einer ersten Scheibe und einer zweiten Scheibe,
   eine erste Scheibe und eine zweite Scheibe werden bereitgestellt, das heißt gewaschen und getrocknet.
(B) Bereitstellen von vier Hohlprofilabstandhaltern in einer erfindungsgemäßen Vorrichtung,
   Bevorzugt wird der erfindungsgemäße Hohlprofilabstandhalter im Anschluss an seine Herstellung bis zum Einbau in die Isolierglaseinheit unter Ausschluss von Feuchtigkeit in einer erfindungsgemäßen Vorrichtung gelagert und gegebenenfalls zur Produktionsstätte der Isolierglaseinheit transportiert. Da die Abstandhalter in der Vorrichtung feuchtigkeitsdicht verpackt sind, wird sichergestellt, dass die Kapazität des Trockenmittels für den Einsatz in der Isolierverglasung ausreicht.
(C) Entnahme von vier Hohlprofilabstandhaltern aus der Vorrichtung und Anordnung der Hohlprofilabstandhalter auf der ersten Scheibe, sodass die vier Hohlprofilabstandhalter einen umlaufenden Abstandhalterrahmen bilden, wobei dieser Schritt automatisiert durchgeführt wird, bevorzugt durch einen Roboter. Falls auf den Seitenwänden der Hohlprofilabstandhalter noch keine plastisch verformbare Abdichtmasse angeordnet ist, wird diese vor dem Anordnen auf der ersten Scheibe mindestens auf der zur ersten Scheibe weisenden Seitenwand aufgetragen.
   Es wird bevorzugt zunächst ein erster Hohlprofilabstandhalter auf der ersten Scheibe aufgesetzt und unter leichtem Druck mittels der plastisch verformbaren Abdichtmasse auf der ersten Seitenwand fixiert. Anschließend werden drei weitere Hohlprofilabstandhalter in einer beliebigen Reihenfolge zu einem rechteckigen Abstandhalterrahmen angeordnet. Die Hohlprofilabstandhalter werden so angeordnet, dass zwei Hohlprofilabstandhaltern an den Ecken aneinander anliegen. Die Flächen, mit denen zwei Hohlprofilabstandhalter aneinanderstoßen, werden als Stoßflächen bezeichnet. Gegebenenfalls wird auf den Stoßflächen eine plastisch verformbare Abdichtmasse angeordnet, sodass direkt eine Abdichtung der Ecke gegen das Eindringen von Feuchtigkeit erzielt wird. Alternativ können die Ecken auch nachträglich mit einer plastisch verformbaren Abdichtmasse abgedichtet werden. Da der Abstandhalterrahmen direkt auf der ersten Scheibe zusammengelegt wird, entfällt die Herstellung eines separaten Abstandhalterrahmens wie nach dem Stand der Technik bekannt. Es sind daher keine Eckverbinder zur Stabilisierung des Abstandhalterrahmens nötig. Die Gefahr, dass ein Abstandhalterrahmen während des Transports zur Isolierglaspresse beschädigt wird oder sich verzieht, wird vermieden. Bevorzugt wird nach dem Aufsetzen des ersten Hohlprofilabstandhalters daran angrenzend ein zweiter Hohlprofilabstandhalter auf die erste Scheibe aufgesetzt Angrenzend an den zweiten Hohlprofilabstandhalter wird ein dritter Hohlprofilabstandhalter auf die erste Scheibe aufgesetzt. Anschließend wird ein vierter Hohlprofilabstandhalter auf die erste Scheibe aufgesetzt und zwar so, dass ein geschlossener umlaufender Abstandhalterrahmen entsteht.
(D) Auflegen der zweiten Scheibe auf den umlaufenden Abstandhalterrahmen und Verpressen der Scheibenanordnung aus erster Scheibe, zweiter Scheibe und Abstandhaltern,
   Die zweite Scheibe wird auf den Seitenwänden der Hohlprofilabstandhalter aufgelegt, die bereits auf der ersten Scheibe angeordnet sind. Die Seitenwände sind bevorzugt bereits in der erfindungsgemäßen Vorrichtung mit einer plastisch verformbaren Abdichtmasse versehen, die für eine Abdichtung des inneren Scheibenzwischenraums sorgt. Alternativ wird die plastisch verformbare Abdichtmasse vor Schritt (D) auf die Seitenwände aufgetragen. Dies kann automatisiert erfolgen. Beim Verpressen wird eine dichte Verbindung zwischen den äußeren Scheiben und dem Abstandhalterrahmen erzeugt.
(E) Befüllen des äußeren Scheibenzwischenraums mit einem sekundären Dichtmittel.
   Der äußere Scheibenzwischenraum wird mit einem sekundären Dichtmittel zumindest teilweise gefüllt. Dies erfolgt bevorzugt in bekannter Weise auf einer Anlage nach dem Stand der Technik.

Das erfindungsgemäße Verfahren ist im Vergleich zum Stand der Technik wesentlich vereinfacht. Die Herstellung eines separaten Abstandhalterrahmens entfällt, was für die Produktion ein wesentlicher Vorteil ist. Insbesondere bei großformatigen Scheiben ist die Herstellung und besonders der Transport eines Abstandhalterrahmens zur Isolierglaspresse schwierig, da die Verbindungsstellen an den Ecken hohen mechanischen Belastungen ausgesetzt sind. Die einzelnen Hohlprofilabstandhalter können dagegen dank der erfindungsgemäßen Vorrichtung leicht transportiert und gehandhabt werden. Zudem wird während der Herstellung kein Trockenmittel zum Befüllen des Abstandhalterrahmens benötigt, da das Trockenmittel bevorzugt bereits in den Hohlprofilabstandhaltern enthalten ist. Somit wird eine Verunreinigung der Isolierglaseinheit aufgrund der Gegenwart von Trockenmittel-Resten vermieden.

In einer bevorzugten Ausführungsform des erfindungsgemäßen Verfahrens wird der Abstandhalterrahmen nach dem Zusammenlegen an den Verbindungsstellen mit einer plastisch verformbaren Abdichtmasse, bevorzugt einem Butyl, zusätzlich abgedichtet. So kann die Abdichtung des inneren Scheibenzwischenraums weiter verbessert werden, was zu einer verbesserten Lebensdauer der Isolierglaseinheit führt.

In einer bevorzugten Ausführungsform wird im Bereich der Stoßflächen vor dem Zusammenlegen von zwei Hohlprofilabstandhaltern in Schritt (C) etwas Kleber oder ein geeignetes doppelseitiges Klebeband aufgebracht, wodurch die Ecke während der Montage stabilisiert wird. Bei der Wahl der Kleber sollte darauf geachtet werden, dass diese möglichst keine flüchtigen Stoffe enthalten, die ansonsten in den inneren Scheibenzwischenraum der Isolierglaseinheit gelangen könnten und dort nachteilige Wirkungen haben.

In einer bevorzugten Ausführungsform des erfindungsgemäßen Verfahrens wird das Verfahren automatisiert durchgeführt. Eine Automatisierung beschleunigt das Verfahren und verbessert die Reproduzierbarkeit.

Bevorzugt wird insbesondere Schritt (C), das heißt das Anordnen und Andrücken bzw. Befestigen auf der ersten Scheibe durch einen Roboter durchgeführt. Da die Hohlprofilabstandhalter in der erfindungsgemäßen Vorrichtung definiert ausgerichtet sind, können sie automatisch durch einen Roboter entnommen werden. So wird die manuelle Handhabung der einzelnen Hohlprofilabstandhalter vermieden und somit auch Beschädigungen oder Verschmutzungen, die während der manuellen Handhabung auftreten können, werden vermieden. Bevorzugt nutzt der Roboter Vakuum-Sauggreifer oder Vakuum-Saugheber, um die Hohlprofilabstandhalter aus den Vertiefungen einer Trägerplatte zu entnehmen.

Bevorzugt wird die Positionierung der vier Hohlprofilabstandhalter durch den Roboter mithilfe einer Kamera unterstützt. So kann die Anordnung eines Hohlprofilabstandhalters in einem definierten Abstand zur Glaskante erfolgen, was zu einem verbesserten Erscheinungsbild in der fertigen Isolierglaseinheit führt. Die kameragestützte Positionierung ist besonders bevorzugt in Kombination mit einer ersten Scheibe und einer zweiten Scheibe, die bearbeitete, das heißt abgeschliffene, Kanten haben. Üblicherweise werden die Scheiben für eine Isolierglaseinheit durch Brechen aus großen Floatglas-Tafeln erzeugt. Die Kanten sind in dem Fall nicht gerade. Dies erschwert für den Hersteller des Fensters die Positionierung im Rahmen und erschwert die Positionierung der Hohlprofilabstandhalter in einem definierten Abstand zur Kante.

In einer bevorzugten Ausführungsform des erfindungsgemäßen Verfahrens sind die erste und zweite Scheibe und die vier Hohlprofilabstandhalter je mit einer Identifikationskennung, wie zum Beispiel einem Barcode oder einem RFID-Tag, versehen. Dies ermöglicht die Dokumentation der Herkunft und die Nachverfolgung der einzelnen Bestandteile während der Produktion und nach der Produktion. Stellt sich heraus, dass für eine bestimmte Charge Abstandhalter ein Produktionsfehler aufgetreten ist, so können die Isolierglaseinheiten auch nach ihrem Einbau in Fenster noch gefunden werden und bei Bedarf ausgetauscht werden. Wenn möglich und bekannt, werden die entsprechenden Abstandhalter oder Scheiben gar nicht erst verbaut oder nicht ausgeliefert. Dies ist automatisiert möglich, indem vor dem Verbau oder vor der Lieferung eine Datensammlung mit den entsprechenden Informationen konsultiert wird. Somit trägt die Kennzeichnung und Nachverfolgung der Bestandteile auch zur Produktsicherheit bei.

In einer bevorzugten Ausführungsform erfolgt die Bereitstellung der gekennzeichneten Scheiben und der gekennzeichneten Hohlprofilabstandhalter abhängig von der zu fertigenden Isolierglaseinheit automatisiert.
Dabei wird bevorzugt für einen Produktionsstandort für eine Schicht ein Produktionsplan erstellt, der die zu fertigenden Isolierglaseinheiten enthält. Abhängig von diesem Produktionsplan werden die benötigten Scheiben automatisch bestellt und zu Produktionsbeginn der entsprechenden Isolierglaseinheit bereitgestellt. Das gleiche gilt für die Hohlprofilabstandhalter. Diese werden in der erfindungsgemäßen Vorrichtung anhand des Produktionsplans, der für die benötigten Isolierglaseinheiten die benötigten Hohlprofilabstandhalter enthält, zusammengestellt. Die Hohlprofilabstandhalter werden unter Ausschluss von Feuchtigkeit in der Vorrichtung verpackt und können so an einen räumlich entfernten Kunden geliefert werden. Der Kunde kann die Abstandhalter nach dem Öffnen der Verpackung beziehungsweise nach dem Entfernen der Hülle zeitnah verarbeiten ohne dass er die ansonsten benötigten Apparate für eine Füllung mit Trockenmittel oder die Auftragung einer Abdichtmasse benötigt. Dies ist gerade für Kunden mit kleineren Produktionsstätten ein großer Vorteil.

In einer bevorzugten Ausführungsform des erfindungsgemäßen Verfahrens enthält die Vorrichtung die gesamten Hohlprofilabstandhalter für eine Produktionsschicht. Somit wird vermieden, dass eine bereits geöffnete Vorrichtung längere Zeit offen gelagert wird und Feuchtigkeit aus der Umgebung aufnehmen kann.

In einer weiteren bevorzugten Ausführungsform des erfindungsgemäßen Verfahrens werden Abstandhalter eingesetzt, die einen Gehrungsschnitt aufweisen, das heißt die einen Winkel von 45° an den Enden aufweisen. Beim Zusammensetzen von zwei derartigen Abstandhaltern entsteht eine rechtwinklige Ecke, d.h. die zusammengesetzten Hohlprofilabstandhalter schließen einen Winkel ein von 90°. Diese Ausführungsform eignet sich besonders für das erfindungsgemäße Zusammensetzen auf der Scheibe.

In einer weiteren bevorzugten Ausführungsform werden Abstandhalter verwendet, die lediglich in den benötigten Maßen abgelängt sind und einen Winkel α von 90° aufweisen. Diese rechtwinkligen Abstandhalterprofile weisen bevorzugt eine plastisch verformbare Abdichtmasse auf den Seitenwänden sowie eine Trockenmittelfüllung auf. Zunächst wird ein Abstandhalterrahmen aus Abstandhaltern mit α = 90° und einer plastisch verformbaren Abdichtmasse auf den Seitenwänden auf der ersten Scheibe zusammengelegt. Die Abstandhalter weisen ein erstes Ende mit α = 90° und ein zweites Ende mit α = 90° auf. Der Abstandhalterrahmen wird so auf der Scheibe ausgeformt, dass die ersten Enden aller Abstandhalter frei liegen und zum äußeren Scheibenzwischenraum der späteren Isolierverglasung weisen. Die zweiten Enden liegen hingegen an der Verglasungsinnenraumwand eines im Rahmen unmittelbar benachbarten Abstandhalters an. Dadurch erhält jeder Abstandhalter an seinem ersten Ende einen zusätzlichen Freiheitsgrad, über den eventuell vorhandene Längentoleranzen der Abstandhalter kompensiert werden können. Auf den so auf der ersten Scheibe zusammengelegten Abstandhalterrahmen wird eine zweite Scheibe aufgelegt und die Anordnung wird zu einer Isolierverglasung verpresst.

Die Erfindung umfasst des Weiteren eine Isolierglaseinheit hergestellt nach dem erfindungsgemäßen Verfahren mit mindestens einer ersten Scheibe, einer zweiten Scheibe, einem umlaufenden zwischen erster und zweiter Scheibe angeordneten Abstandhalterrahmen, einem inneren Scheibenzwischenraum und einem äußeren Scheibenzwischenraum. Der umlaufende Abstandhalterrahmen umfasst vier Hohlprofilabstandhalter, die bevorzugt ohne die Verwendung von Eckverbindern zu einem Rahmen zusammengebaut sind. Ein Eckverbinder meint hier ein Verbindungselement, das zwei Einsteckschenkel hat, die in die Hohlräume der beiden zu verbindenden Hohlprofilabstandhalter eingesteckt werden, wodurch eine Eckverbindung hergestellt wird. Die Verbindung in den Ecken wird bevorzugt über eine plastisch verformbare Abdichtmasse hergestellt. Die erste Scheibe ist dabei an der ersten Seitenwand des Abstandshalters über die plastisch verformbare Abdichtmasse angebracht, und die zweite Scheibe ist an der zweiten Seitenwand über die plastisch verformbare Abdichtmasse angebracht. Das bedeutet, zwischen der ersten Seitenwand und der ersten Scheibe sowie zwischen der zweiten Seitenwand und der zweiten Scheibe ist die plastisch verformbare Abdichtmasse angeordnet. Die erste Scheibe und die zweite Scheibe sind parallel und bevorzugt deckungsgleich angeordnet. Die Kanten der beiden Scheiben sind daher im Randbereich bündig angeordnet, das heißt sie befinden sind auf gleicher Höhe. Der innere Scheibenzwischenraum wird von der ersten und zweiten Scheibe und der Verglasungsinnenraumwand begrenzt. Der äußere Scheibenzwischenraum ist definiert als der Raum, der durch die erste Scheibe, die zweite Scheibe und die Außenwand des Abstandhalters begrenzt ist. Der äußere Scheibenzwischenraum ist mindestens teilweise mit einem sekundären Dichtmittel verfüllt. Das sekundäre Dichtmittel trägt zur mechanischen Stabilität der Isolierglaseinheit bei und nimmt einen Teil der Klimalasten auf, die auf den Randverbund wirken.

In einer weiteren bevorzugten Ausführungsform ist das sekundäre Dichtmittel so angebracht, dass der gesamte äußere Scheibenzwischenraum vollständig mit sekundärem Dichtmittel gefüllt ist. Dies führt zu einer maximalen Stabilisierung der Isolierglaseinheit.

Bevorzugt enthält das sekundäre Dichtmittel Polymere oder silanmodifizierte Polymere, besonders bevorzugt organische Polysulfide, Silikone, raumtemperaturvernetzenden (RTV) Silikonkautschuk, peroxidischvernetzten Silikonkautschuk und/oder additionsvernetzten Silikonkautschuk, Polyurethane, Hotmelt und/oder Butylkautschuk. Diese Dichtmittel haben eine besonders gute stabilisierende Wirkung.

Die erste Scheibe und die zweite Scheibe der Isolierglaseinheit enthalten bevorzugt Glas, Keramik und/oder Polymere, besonders bevorzugt Quarzglas, Borosilikatglas, Kalk-Natron-Glas, Polymethylmethacrylat oder Polycarbonat.

Die erste Scheibe und die zweite Scheibe verfügen über eine Dicke von 2 mm bis 50 mm, bevorzugt 3 mm bis 16 mm, wobei beide Scheiben auch unterschiedliche Dicken haben können.

In einer weiteren Ausführungsform umfasst die Isolierverglasung mehr als zwei Scheiben. Dabei kann der Abstandhalter zum Beispiel Nuten enthalten, in denen mindestens eine weitere Scheibe angeordnet ist. Es könnten auch mehrere Scheiben als Verbundglasscheibe ausgebildet sein.

Im Folgenden wird die Erfindung anhand von Zeichnungen näher erläutert. Die Zeichnungen sind rein schematische Darstellungen und nicht maßstabsgetreu. Sie schränken die Erfindung in keiner Weise ein. Es zeigen:
- Figur 1: eine perspektivische Draufsicht einer erfindungsgemäßen Vorrichtung,
- Figur 2: eine vergrößerte Ansicht des Ausschnitts A aus Figur 1,
- Figur 3: eine perspektivische Draufsicht auf einen vergrößerten Bereich der erfindungsgemäßen Vorrichtung aus Figur 1,
- Figur 4: eine vergrößerte Ansicht eines Ausschnitts von Figur 3,
- Figur 5A, 5B: jeweils einen Querschnitt durch einen Hohlprofilabstandhalter, der mit einer plastisch verformbaren Abdichtmasse versehen ist,
- Figur 6: einen Querschnitt durch einen Randbereich einer erfindungsgemäßen Isolierglaseinheit,
- Figur 7: eine Draufsicht auf eine erste Scheibe mit zusammengesetztem umlaufenden Abstandhalterrahmen,
- Figur 8: eine Draufsicht auf eine erste Scheibe mit zusammengesetztem umlaufenden Abstandhalterrahmen und
- Figur 9: eine perspektivische Draufsicht eines polymeren Hohlprofils.

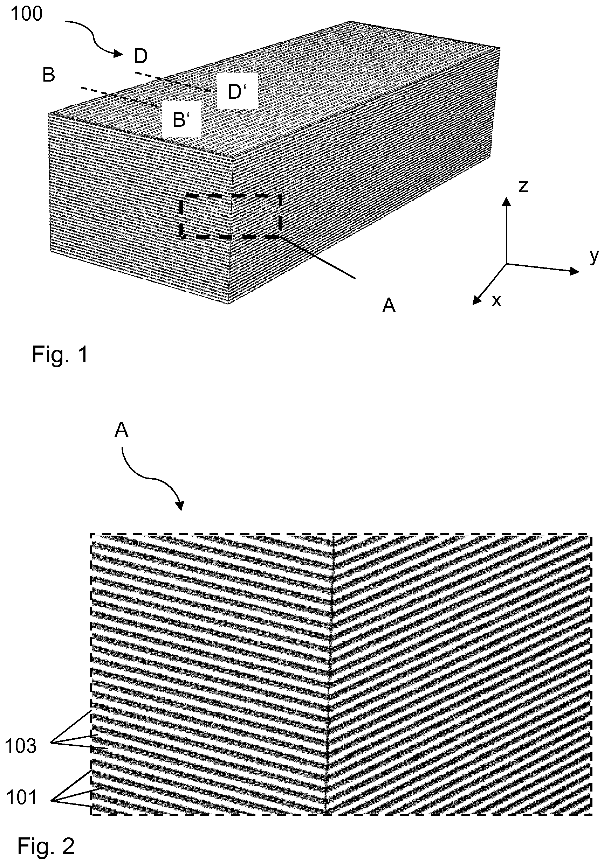

Figur 1 und Figur 2 zeigen eine Außensicht einer erfindungsgemäßen Vorrichtung 100 zum Lagern und Ausrichten von Hohlprofilabstandhaltern 110 für Isolierglaseinheiten. Die Vorrichtung 100 umfasst eine Vielzahl von profilierten Trägerplatten 101, die deckungsgleich übereinandergestapelt sind. Jeweils zwischen zwei Trägerplatten 101 ist am Rand umlaufend ein Distanzrahmen 103 angeordnet, der die Zwischenräume 104 zwischen zwei Trägerplatten 101 begrenzt und abschließt. Bei Blick auf die erfindungsgemäße Vorrichtung von der Seite sieht man demnach die Folge (von oben auf dem Blatt nach unten auf dem Blatt bzw. Z-Richtung): oberste Trägerplatte - Distanzrahmen - n x (Trägerplatte - Distanzrahmen) - unterste Trägerplatte, wobei n zum Beispiel 80 ist. Dies ist in Figur 2 durch die sich abwechselnden hellen und dunklen Schichten gezeigt, wobei eine hellere Schicht einem Distanzrahmen entspricht und eine dunklere Schicht einer Trägerplatte. Der Trägerplattenstapel wird nach oben und nach unten jeweils von einer Trägerplatte abgeschlossen. Die Trägerplatten erstrecken sich zum Beispiel 2800 mm in Längsrichtung (X-Richtung), ungefähr 1200 mm in Querrichtung (Y-Richtung) und bilden einen etwa 1 m hohen (Z-Richtung) Trägerplattenstapel. Auf einer Trägerplatte können zum Beispiel 50 Vertiefungen nebeneinander angeordnet sein mit einer Breite von etwa 17 mm, geeignet für 16 mm breite Hohlprofilabstandhalter. So bleibt ein ausreichend großer Abstand von etwa 4 bis 5 mm zwischen zwei Hohlprofilabstandhaltern frei. Dieser Abstand stellt sicher, dass sich die auf den Seitenwänden 2.1 und 2.2 teilweise aufgebrachte plastisch verformbare Abdichtmasse 10 von zwei nebeneinanderliegenden Hohlprofilabstandhaltern nicht berührt.

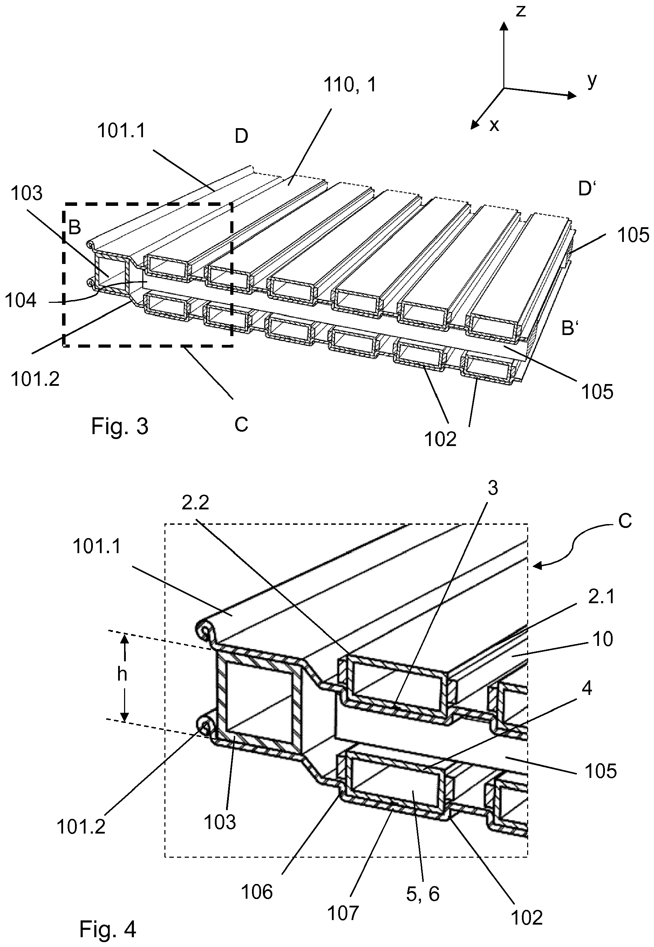

Figur 3 zeigt einen Ausschnitt aus der erfindungsgemäßen Vorrichtung 100 gezeigt in Figur 1. Der Ausschnitt erstreckt sich von einem Querschnitt entlang der Linie B-B' bis zur Linie D-D'. Der Ausschnitt zeigt allerdings nicht die oberste Trägerplatte, sondern eine Lage Hohlprofilabstandhalter. Gezeigt ist ein Distanzrahmen 103 mit einer darüber angeordneten oberen profilierten Trägerplatte 101.1 und einer darunter angeordneten unteren profilierten Trägerplatte 101.2. Die Trägerplatten 101.1 und 101.2 bestehen aus Stahl und haben eine Dicke von 0,5 mm bis 2,5 mm. In den Trägerplatten sind mehrere parallel verlaufende Vertiefungen 102 angeordnet, die für die Aufnahme der Hohlprofilabstandhalter 110 vorgesehen sind. Der Distanzrahmen 103 ist ein hohles Stahlprofil mit einem quadratischen Querschnitt und einer Höhe von etwa 12 mm. Der Distanzrahmen 103 bildet die Abgrenzung des zwischen zwei Trägerplatten angeordneten feuchtigkeitsdichten Zwischenraums 104. Die Abdichtung des Zwischenraums 104 gegen Feuchtigkeit wird verbessert durch zwei elastische Dichtungen aus Gummi, die zwischen der oberen Trägerplatte 101.1 und dem Distanzrahmen 103 sowie zwischen der unteren Trägerplatte 101.2 und dem Distanzrahmen 103 angeordnet sind (nicht dargestellt in der Figur). Im feuchtigkeitsdichten Zwischenraum 104 sind in den Vertiefungen 102 jeweils Hohlprofilabstandhalter 110 angeordnet. Im Beispiel ist pro Vertiefung jeweils ein Hohlprofilabstandhalter 110 angeordnet. Bei kurzen Hohlprofilabstandhaltern ist es auch möglich, dass mehr als ein Hohlprofilabstandhalter in einer Vertiefung 102 angeordnet ist. Die Vertiefungen 102 haben jeweils einen Boden 107 sowie zwei parallel verlaufende Wände 106. Die Vertiefungen 102 haben eine Tiefe von etwa 1 mm bis 2 mm. Die Hohlprofilabstandhalter 110 weisen jeweils eine Außenwand 4, eine gegenüberliegende Verglasungsinnenraumwand 3 und zwei Seitenwände 2 auf, die gemeinsam den Hohlraum 5 umschließen. Im Hohlraum 5 ist ein Molsieb als Trockenmittel 6 angeordnet (nicht gezeigt in der Figur). Die Verglasungsinnenraumwand 3 der Hohlprofilabstandhalter 110 weist jeweils in Richtung des Bodens 107 der Vertiefungen. Auf einem Teil der Seitenwände 2.1 und 2.2 ist eine plastisch verformbare Abdichtmasse 10 angeordnet. Der innerhalb der Vertiefungen 102 angeordnete Bereich der Seitenwände 2.1 und 2.2 ist frei von plastisch verformbarer Abdichtmasse 10, sodass die Hohlprofilabstandhalter 110 nicht in den Vertiefungen festkleben. Der in Richtung der oberen Trägerplatte 101.1 weisende Teil der Seitenwände 2.1 und 2.2 ist ebenfalls frei von plastisch verformbarer Abdichtmasse 10, sodass die elastischen Zwischenstücke 105, die auf der Außenwand eines Hohlprofilabstandhalters aufliegen nicht mit der Abdichtmasse 10 in Kontakt kommen. Die elastischen Zwischenstücke 105 verhindern ein Verrutschen der Hohlprofilabstandhalter während des Transports. Die elastischen Zwischenstücke 105 sind zum Beispiel Schaumstoffstreifen, die sich in Querrichtung (Y-Richtung) im Wesentlichen über die gesamte Breite des Zwischenraums 104 erstrecken. Es sind mehrere elastische Zwischenstücke 105 parallel zueinander in einem Zwischenraum 104 angeordnet. Die elastischen Zwischenstücke beugen zudem einem Durchbiegen der oberen Trägerplatte 101.1 vor.
Für die Isolierglasproduktion können nun nach Abnahme der obersten Trägerplatte mittels zum Beispiel eines Sauggreifers, die Hohlprofilabstandhalter 110 einzeln entnommen werden. Wenn eine Trägerplatte leer ist, kann diese mittels Sauggreifern entfernt werden und die nächste Lage Abstandhalter verwendet werden. Dank der einzelnen Zwischenräume 104, die jeweils abgeschlossen sind gegenüber Feuchtigkeit, werden die Hohlprofilabstandhalter auf den am unteren Ende des Trägerplattenstapels befindlichen Trägerplatten auch vor Feuchtigkeit geschützt, wenn die oberen Lagen bereits entfernt wurden.

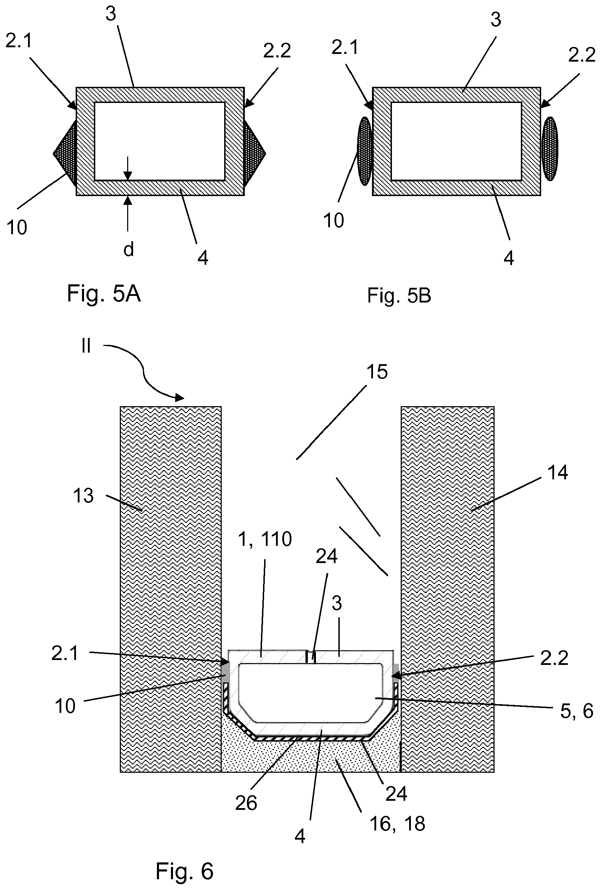

Figur 5A zeigt ein Hohlprofil 1 mit einer Wandstärke d im Querschnitt. Das Hohlprofil hat einen rechteckigen Querschnitt und kann aus einem Metall oder aus einem Polymer gefertigt sein. Auf der ersten Seitenwand 2.1 und auf der zweiten Seitenwand 2.2 ist ein Butyl als plastisch verformbare Abdichtmasse 10 aufgebracht. Das Butyl hat einen dreieckigen Querschnitt. Diese Formgebung führt dazu, dass beim Aufsetzen auf eine Glasscheibe zunächst nur Kontakt mit der Spitze des Dreiecks hergestellt wird. Beim Aufdrücken des Hohlprofils auf die Glasscheibe wird das Butyl verformt und verbreitert sich, sodass ein großflächiger Kontakt zur Glasscheibe hergestellt wird. Der Einschluss von kleinen Luftblasen wird so wirksam verhindert.
Figur 5B zeigt wie Figur 5A ein Hohlprofil im Querschnitt, auf dessen Seitenwänden 2.1 und 2.2 Butyl 10 aufgetragen ist, das im Querschnitt eine näherungsweise ovale Form hat. Die ovale Form führt auch dazu, dass beim Aufsetzen auf eine Scheibe die Kontaktfläche zwischen Scheibe und Butyl kleiner ist als bei einer rechteckigen Form, sodass ein Lufteinschluss zwischen Butyl und Glas weitgehend verhindert wird. In Figur 5A und 5B ist sowohl der direkt an die Verglasungsinnenraumwand 3 als auch der an die Außenwand 4 grenzende Bereich der Seitenwände 2.1 und 2.2 frei von Butyl. Somit wird verhindert, dass die Hohlprofile in der erfindungsgemäßen Vorrichtung festkleben.
Unabhängig von der Form des Butylstrangs wird das Butyl mit einer Dicke von 2,5 g/m bis höchstens 4 g/m aufgebracht. Damit kann eine sichere Abdichtung gewährleistet werden.

Figur 6 zeigt einen Querschnitt durch eine Isolierglaseinheit II mit einem Hohlprofilabstandhalter 110 aus einer erfindungsgemäßen Vorrichtung. Das Hohlprofil 1 ist nicht rechteckig im Querschnitt, sondern die den Seitenwänden 2.1, 2.2 nächstliegenden Abschnitte der Außenwand 4 sind in einem Winkel von etwa 45° zur Außenwand 4 in Richtung der Seitenwände geneigt. Zwischen einer ersten Scheibe 13 und einer zweiten Scheibe 14 ist über eine plastisch verformbare Abdichtmasse 10 umlaufend ein Abstandhalterrahmen umfassend den Hohlprofilabstandhalter 110 angebracht. Die plastisch verformbare Abdichtmasse 10 verbindet dabei die Seitenwände 2.1 und 2.2 des Hohlprofils 1 mit den Scheiben 13 und 14. Der an die Verglasungsinnenraumwand 3 des Abstandshalters 110 angrenzende innere Scheibenzwischenraum 15 wird als der von den Scheiben 13, 14 und dem Abstandhalter 110 begrenzte Raum definiert. Der an die Außenwand 4 des Abstandhalters 110 angrenzende äußere Scheibenzwischenraum 16 ist ein umlaufender Abschnitt der Verglasung, der von je einer Seite von den beiden Scheiben 13, 14 und auf einer weiteren Seite von dem Abstandhalterrahmen begrenzt wird und dessen vierte Seite offen ist. Der innere Scheibenzwischenraum ist zum Beispiel mit Argon gefüllt. Zwischen jeweils einer Seitenwand 2.1 bzw. 2.2 und der benachbarten Scheibe 13 bzw. 14 ist eine plastisch verformbare Abdichtmasse 10 eingebracht, die den Spalt zwischen Scheibe 13, 14 und Hohlprofilabstandhalter 110 abdichtet. Die plastisch verformbare Abdichtmasse 10 ist Polyisobutylen. Auf der Außenwand 4 ist ein sekundäres Dichtmittel 18 im äußeren Scheibenzwischenraum 16 angebracht, das der Verklebung der ersten Scheibe 13 und der zweiten Scheibe 14 dient. Das sekundäre Dichtmittel 18 besteht aus Silikon. Das sekundäre Dichtmittel 18 schließt bündig mit den Scheibenkanten der ersten Scheibe 13 und der zweiten Scheibe 14 ab.

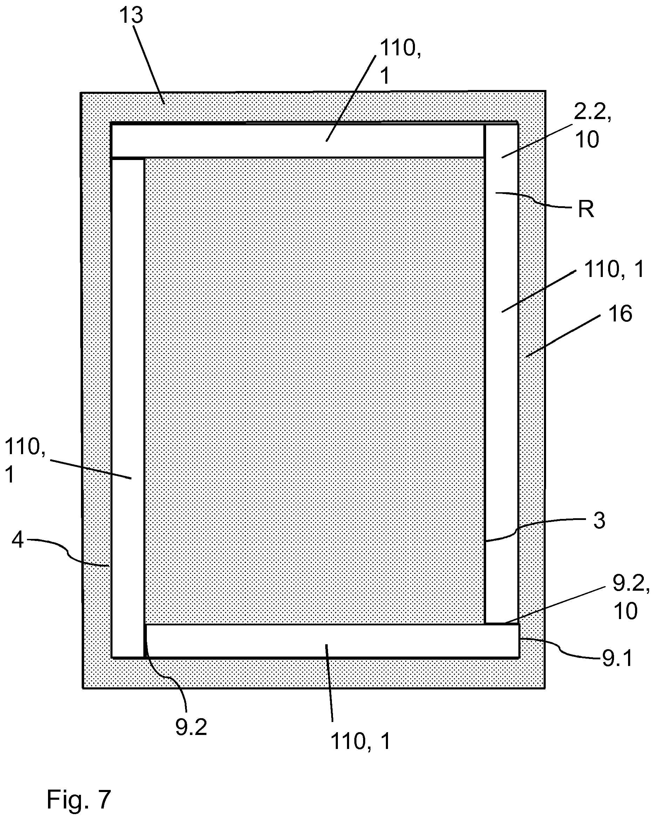

Figur 7 zeigt eine Draufsicht auf eine erste Scheibe 13 mit darauf zusammengesetztem umlaufenden Abstandhalterrahmen R und somit ein Zwischenprodukt des erfindungsgemäßen Verfahrens. Die Hohlprofilabstandhalter 110 weisen jeweils eine erste Stoßfläche 9.1 und eine zweite Stoßfläche 9.2 auf, die senkrecht zur Außenwand 4 und zur Verglasungsinnenraumwand 3 der Abstandhalter 110 verlaufen. Die Abstandhalter 110 bilden einen umlaufenden Rahmen R, wobei die Abstandhalter 110 umlaufend so zueinander positioniert sind, dass die ersten Stoßflächen 9.1 in Richtung des äußeren Scheibenzwischenraums 16 weisen und die zweiten Stoßflächen 9.2 der Abstandhalter 110 unmittelbar an eine Verglasungsinnenraumwand 3 eines jeweils benachbarten Abstandhalters 110 grenzen. An der in Richtung des äußeren Scheibenzwischenraums 16 frei liegenden ersten Stoßfläche 9.1 findet somit eine Kompensation von Fertigungstoleranzen statt. Die offenen Querschnitte im Bereich der ersten Stoßflächen 9.1 sind mit einer plastisch verformbaren Abdichtmasse 10 (hier nicht gezeigt) verschlossen. An den Berührungsstellen zwischen den zweiten Stoßflächen 9.2 und den Verglasungsinnenraumwänden 3 erfolgt ebenfalls eine Abdichtung mit der plastisch verformbaren Abdichtmasse 10. Bevorzugt werden die Hohlprofilabstandhalter bereits mit der plastisch verformbaren Abdichtmasse 10 im Bereich der Stoßflächen bereitgestellt. Auch auf der offenliegenden zweiten Seitenwand 2.2 der gezeigten Hohlprofilabstandhalter I ist eine plastisch verformbare Abdichtmasse 10 (nicht gezeigt) angebracht, sodass nach dem Anbringen der zweiten Scheibe ein abgedichteter innerer Scheibenzwischenraum entsteht. In Figur 6 ist ein beispielhafter Querschnitt durch eine Isolierglaseinheit II gezeigt, die ausgehend von der gezeigten Anordnung hergestellt wurde.

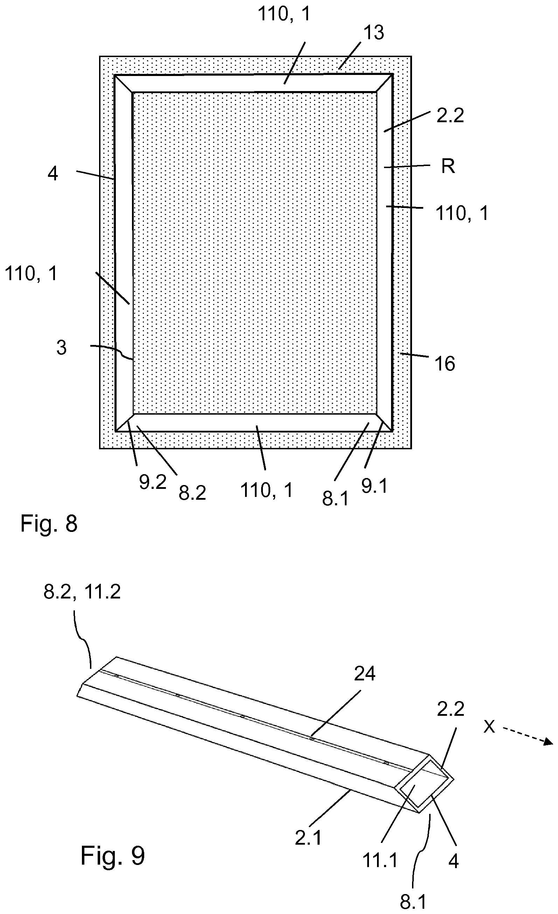

Figur 8 zeigt eine Draufsicht auf eine erste Scheibe 13 mit umlaufendem Abstandhalterrahmen R, der aus vier Hohlprofilabstandhaltern 110 besteht. Der umlaufende Rahmen R ist rechteckig, das heißt die Hohlprofilabstandhalter 110 sind jeweils im Winkel von 90° zueinander angeordnet. Jeder Hohlprofilabstandhalter 110 ist an seinem ersten Ende 8.1 und an seinem zweiten Ende 8.2 auf Gehrung geschnitten. Die offenen Querschnitte an den beiden Enden sind mit einer plastisch verformbaren Abdichtmasse 10 verschlossen. Auf der offenliegenden zweiten Seitenwand 2.2 und auf der zur ersten Scheibe 13 weisenden ersten Seitenwand 2.1 der gezeigten Hohlprofilabstandhalter 110 ist eine plastisch verformbare Abdichtmasse 10 angebracht, mithilfe dessen die Hohlprofilabstandhalter 110 während der Herstellung fixiert werden und die gleichzeitig die Abdichtung des inneren Scheibenzwischenraums 15 sicherstellt.

Figur 9 zeigt eine perspektivische Draufsicht auf ein polymeres Hohlprofil 1, das Teil eines Hohlprofilabstandhalter 110 ist. Das Hohlprofil 1 umfasst eine erste Seitenwand 2.1, eine parallel dazu verlaufende Seitenwand 2.2, eine Verglasungsinnenraumwand 3 und eine Außenwand 4. Die Verglasungsinnenraumwand 3 verläuft senkrecht zu den Seitenwänden 2.1 und 2.2 und verbindet die beiden Seitenwände. Die Außenwand 4 liegt gegenüber der Verglasungsinnenraumwand 3 und verbindet die beiden Seitenwände 2.1 und 2.2. Die Außenwand 4 verläuft im Wesentlichen senkrecht zu den Seitenwänden 2.1 und 2.2. Alternativ können die den Seitenwänden 2.1 und 2.2 nächstliegen Abschnitte 4.1 und 4.2 der Außenwand 4 auch in einem Winkel von etwa 45° zur Außenwand 4 in Richtung der Seitenwände 2.1 und 2.2 geneigt sein (siehe Figur 6). Die abgewinkelte Geometrie kann die Stabilität des Hohlprofils 1 verbessern.

Die Wandstärke d des Hohlprofils beträgt 0,5 mm. Die Wandstärke d ist im Wesentlichen überall gleich. Dies verbessert die Stabilität des Hohlprofils und vereinfacht die Herstellung. Das Hohlprofil 1 weist beispielsweise eine Gesamthöhe von 6,5 mm und eine Breite von 16 mm auf. Die Außenwand 4, die Verglasungsinnenraumwand 3 und die beiden Seitenwände 2.1 und 2.2 umschließen den Hohlraum 5. Das polymere Hohlprofil 1 besteht im Wesentlichen aus einem Styrol-Acrylnitril mit einem Glasfaseranteil von 35%. In der Verglasungsinnenraumwand 3 sind Perforierungen 24 angebracht, die in der Isolierglaseinheit eine Verbindung zum inneren Scheibenzwischenraum herstellen. Über die Perforierungen 24 in der Verglasungsinnenraumwand 3 kann Trockenmittel im Hohlraum 5 dann Feuchtigkeit aus dem inneren Scheibenzwischenraum 15 (siehe Figur 6) aufnehmen.
Das polymere Hohlprofil 1 erstreckt sich in Längsrichtung X vom ersten Ende 8.1 zum zweiten Ende 8.2. Das Hohlprofil 1 ist an seinem ersten Ende 8.1 und an seinem zweiten Ende 8.2 auf Gehrung geschnitten. Die Schnittflächen sind in diesem Fall geeignet als Stoßflächen 9.1 und 9.2, das heißt über diese Flächen können zwei Hohlprofilabstandhalter 110 aneinander gesetzt werden unter Bildung eines 90°-Winkel. Die Ebene beider Stoßflächen 9.1 und 9.2 schließen einen Winkel α (alpha) von etwa 45° mit der Ebene der Außenwand ein. Am ersten Ende 8.1 befindet sich eine erste Öffnung 11.1, über die Trockenmittel 6 in das Hohlprofil eingefüllt werden kann. Am zweiten Ende 8.2 befindet sich eine entsprechende Öffnung 11.2, die ebenfalls zur Befüllung geeignet ist.

### Bezugszeichenliste

- 100: Vorrichtung zum Lagern und Ausrichten von Hohlprofilabstandhaltern
- 101: profilierte Trägerplatte, Trägerplatte
- 101.1: obere profilierte Trägerplatte
- 101.2: untere profilierte Trägerplatte
- 102: Vertiefung
- 103: Distanzrahmen
- 104: feuchtigkeitsdichter Zwischenraum
- 105: elastisches Zwischenstück
- 106: Wand einer Vertiefung
- 107: Boden einer Vertiefung
- 110: Hohlprofilabstandhalter
- II: Isolierglaseinheit, Isolierverglasung
- R: umlaufender Abstandhalterrahmen
- 1: polymeres Hohlprofil, Hohlprofil
- 2: Seitenwand
- 2.1: erste Seitenwand
- 2.2: zweite Seitenwand
- 3: Verglasungsinnenraumwand
- 4: Außenwand
- 5: Hohlraum
- 6: Trockenmittel
- 8.1: erstes Ende des polymeren Hohlprofils
- 8.2: zweites Ende des polymeren Hohlprofils
- 9.1: erste Stoßfläche
- 9.2: zweite Stoßfläche
- 10: plastisch verformbare Abdichtmasse
- 11.1: erste Öffnung
- 11.2: zweite Öffnung
- 13: erste Scheibe
- 14: zweite Scheibe
- 15: innerer Scheibenzwischenraum
- 16: äußerer Scheibenzwischenraum
- 18: sekundäres Dichtmittel
- 24: Perforierung in der Verglasungsinnenraumwand

## Patentansprüche

1. Vorrichtung (100) zum Lagern und Ausrichten von Hohlprofilabstandhaltern (110) für Isolierglaseinheiten, mindestens umfassend zwei oder mehr profilierte Trägerplatten (101), wobei
- jede profilierte Trägerplatte (101) zwei oder mehr parallel verlaufende Vertiefungen (102) aufweist, die in der Erstreckungsebene (XY) der profilierten Trägerplatte (101) nebeneinander angeordnet sind,
- in den Vertiefungen (102) Hohlprofilabstandhalter (110) angeordnet sind,
- alle profilierten Trägerplatten (101) übereinander im Wesentlichen deckungsgleich gestapelt sind,
- jeweils zwischen zwei profilierten Trägerplatten (101.1, 101.2) am Rand der gestapelten profilierten Trägerplatten (101.1, 101.2) umlaufend ein Distanzrahmen (103) angeordnet ist, wobei der Abstand zwischen einer auf dem Distanzrahmen (103) angeordneten oberen profilierten Trägerplatte (101.1) und einer unter dem Distanzrahmen (103) angeordneten unteren profilierten Trägerplatte (101.2) durch die Höhe h des Distanzrahmens bestimmt ist, und wobei durch den Distanzrahmen (103), die untere profilierte Trägerplatte (101.2) und die obere profilierte Trägerplatte (101.1) ein feuchtigkeitsdichter Zwischenraum (104) begrenzt ist.

2. Vorrichtung (100) nach Anspruch 1, wobei im feuchtigkeitsdichten Zwischenraum (104) zwischen der oberen Trägerplatte (101.1) und der unteren Trägerplatte (101.2) mindestens zwei elastische Zwischenstücke (105) angeordnet sind, die mit der oberen Trägerplatte (101.1) und mit auf der unteren Trägerplatte (101.2) angeordneten Hohlprofilabstandhaltern (110) in Kontakt stehen.

3. Vorrichtung (100) nach einem der Ansprüche 1 bis 2, wobei zwischen dem Distanzrahmen (103) und der oberen Trägerplatte (101.1) und zwischen dem Distanzrahmen (103) und der unteren Trägerplatte (101.2) jeweils eine Dichtung, bevorzugt eine elastische Dichtung angeordnet ist.

4. Vorrichtung (100) nach einem der Ansprüche 1 bis 3, wobei die Vertiefungen (102) eine Breite zwischen 5 mm und 60 mm aufweisen, eine Länge zwischen 100 cm und 300 cm und eine Tiefe zwischen 1 mm und 3 mm aufweisen.

5. Vorrichtung (100) nach einem der Ansprüche 1 bis 4, wobei zwischen 10 und 150 Trägerplatten (101) gestapelt sind.

6. Vorrichtung (100) nach einem der Ansprüche 1 bis 5, wobei die Trägerplatten metallisch sind und bevorzugt aus einem Stahl bestehen.

7. Vorrichtung (100) nach einem der Ansprüche 1 bis 6, wobei der Distanzrahmen (103) metallisch ist und bevorzugt aus einem Stahl besteht.

8. Vorrichtung (100) nach einem der Ansprüche 1 bis 7, wobei die Hohlprofilabstandhalter (110) mindestens umfassen:
- ein sich in Längsrichtung (X) erstreckendes Hohlprofil (1), umfassend
- eine erste Seitenwand (2.1) und eine parallel dazu angeordnete zweite Seitenwand (2.2),
- eine Verglasungsinnenraumwand (3), die die Seitenwände (2.1, 2.2) miteinander verbindet;
- eine Außenwand (4), die im Wesentlichen parallel zur Verglasungsinnenraumwand (3) angeordnet ist und die Seitenwände (2.1, 2.2) miteinander verbindet;
- einen Hohlraum (5), der von den Seitenwänden (2.1, 2.2), der Verglasungsinnenraumwand (3) und der Außenwand (4) umschlossen ist und
- der Hohlraum (5) ein Trockenmittel (6) enthält und der Hohlraum (5) durch einen ersten Verschluss (7.1) und einen zweiten Verschluss (7.2) verschlossen ist gegen den Verlust von Trockenmittel (6).

9. Vorrichtung nach einem der Ansprüche 1 bis 8, wobei die Hohlprofilabstandhalter eine Höhe zwischen 5 mm und 15 mm und eine Breite zwischen 5 mm und 55 mm aufweisen.

10. Vorrichtung (100) nach einem der Ansprüche 8 oder 9, wobei
- eine plastisch verformbare Abdichtmasse (10) auf der ersten Seitenwand (2.1) und der zweiten Seitenwand (2.2) aufgebracht ist,
- die plastisch verformbare Abdichtmasse (10) nur auf einem Teil der ersten Seitenwand (2.1) und nur auf einem Teil der zweiten Seitenwand (2.2) angeordnet ist, sodass der Bereich des Hohlprofilabstandhalters (110), der innerhalb einer Vertiefung (102) angeordnet ist, frei von plastisch verformbarer Abdichtmasse (10) ist und sodass der in Richtung einer oberen Trägerplatte (101.1) weisende Teil der Seitenwände (2.1, 2.2) frei von plastisch verformbarer Abdichtmasse (10) ist.

11. Verfahren zur Herstellung einer Isolierglaseinheit (II) unter Verwendung einer Vorrichtung (100) nach einem der Ansprüche 1 bis 10, mindestens umfassend die folgenden Schritte,
- Bereitstellung einer ersten Scheibe (13) und einer zweiten Scheibe (14),
- Bereitstellen von vier Hohlprofilabstandhaltern (110) in der Vorrichtung (100) nach einem der Ansprüche 1 bis 10,
- Entnahme von vier Hohlprofilabstandhaltern (110) aus der Vorrichtung (100) und Anordnung von vier Hohlprofilabstandhaltern (110) über eine plastisch verformbare Abdichtmasse (10) auf der ersten Scheibe (13), sodass die vier Hohlprofilabstandhalter (110) einen umlaufenden Abstandhalterrahmen bilden, wobei dieser Schritt automatisiert durchgeführt wird,
- Auflegen der zweiten Scheibe (14) auf den umlaufenden Abstandhalterrahmen und Verpressen der Scheibenanordnung aus erster Scheibe (13), zweiter Scheibe (14) und Hohlprofilabstandhaltern (110),
- Befüllen des äußeren Scheibenzwischenraums (16) mit einem sekundären Dichtmittel (18).

12. Verfahren zur Herstellung einer Isolierglaseinheit (II) nach Anspruch 11, wobei der Abstandhalterrahmen in den Ecken mit einer plastisch verformbaren Abdichtmasse (10) zusätzlich abgedichtet wird.

13. Verfahren zur Herstellung einer Isolierglaseinheit (II) nach einem der Ansprüche 11 bis 12, wobei die Positionierung der vier Hohlprofilabstandhalter (110) durch einen Roboter unterstützt durch eine Kamera in einem definierten Abstand zur Glaskante erfolgt.

14. Verfahren zur Herstellung einer Isolierglaseinheit (II) nach einem der Ansprüche 11 bis 13, wobei die erste Scheibe (13), die zweite Scheibe (14) und die Hohlprofilabstandhalter (110) je mit einer Identifikationskennung versehen sind.
